(19) Europäisches Patentamt / European Patent Office / Office européen des brevets

(11) **EP 4 184 132 A1**

(12) **EUROPEAN PATENT APPLICATION**
published in accordance with Art. 153(4) EPC

(43) Date of publication:
**24.05.2023 Bulletin 2023/21**

(21) Application number: **21843344.9**

(22) Date of filing: **25.03.2021**

(51) International Patent Classification (IPC):
**G01F 25/00** (2022.01)

(52) Cooperative Patent Classification (CPC):
Y02E 30/30

(86) International application number:
**PCT/CN2021/082919**

(87) International publication number:
**WO 2022/012083 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2020 CN 202010688219**

(71) Applicants:
• **China Nuclear Power Operations Co., Ltd.**
**Shenzhen, Guangdong 518026 (CN)**
• **China General Nuclear Power Corporation**
**Shenzhen, Guangdong 518026 (CN)**
• **CGN Power Co., Ltd.**
**Shenzen, Guangdong 518026 (CN)**

(72) Inventors:
• **CHEN, Yongwei**
**Shenzhen, Guangdong 518026 (CN)**
• **XIE, Yongjing**
**Shenzhen, Guangdong 518026 (CN)**
• **XU, Ziren**
**Shenzhen, Guangdong 518026 (CN)**

(74) Representative: **Noble, Nicholas et al**
**Kilburn & Strode LLP**
**Lacon London**
**84 Theobalds Road**
**London WC1X 8NL (GB)**

(54) **VENTURI TUBE FAULT CORRECTION METHOD AND APPARATUS, COMPUTER DEVICE AND STORAGE MEDIUM**

(57) A Venturi tube fault correction method, comprising: acquiring a measurement value of a first flowmeter and a measurement value of a second flowmeter in a Venturi tube (S100); acquiring a flowmeter evaluation result according to the measurement value of the first flowmeter, the measurement value of the second flowmeter and a flowmeter evaluation criterion (S200); acquiring a Venturi tube evaluation result according to the measurement value of the first flowmeter, the measurement value of the second flowmeter and a Venturi tube evaluation criterion (S300); and acquiring a flowmeter correction policy according to the flowmeter evaluation result, and acquiring a Venturi tube replacement policy according to the Venturi tube evaluation result (S400). A venturi tube fault correction apparatus, comprising a data acquisition module, a flowmeter evaluation module, a Venturi tube evaluation module and a policy acquisition module.

FIG. 2

**Description**

**CROSS REFERENCE TO RELATED APPLICATION**

The present application is based on and claims priority to Chinese Patent Application with No. 202010688219.0 and filed on July 16, 2020, the content of which is expressly incorporated herein by reference in its entirety.

**TECHNICAL FIELD**

The present application relates to a semiconductor device and a manufacturing method thereof.

**BACKGROUND**

The main feed water flow of nuclear power plants is mainly measured by the pressure difference principle, that is the main feed water flow is obtained by the pressure differences before and after the fluid flows through the Venturi tube, and corresponding calculation and processing. The main feed water flow is one of important process parameters of the nuclear power units, and it mainly contributes to the evaporator water level control and the reactor protection. However, as the operating time increases, the erosion of the Venturi tube by the fluid may intensify, and the characteristics thereof may also change, which directly affect the measurement accuracy of the main feed water flow, and undoubtedly affect the evaporator water level control and the reactor protection.

**SUMMARY**

According to multiple embodiments, the present invention in the first aspect provides a Venturi tube fault correction method, including:
acquiring a measurement value of a first flowmeter and a measurement value of a second flowmeter in the Venturi tube; acquiring flowmeter assessment results according to the measurement value of the first flowmeter, the measurement value of the second flowmeter, and flowmeter assessment criteria; obtaining a Venturi tube assessment result according to the measurement value of the first flowmeter, the measurement value of the second flowmeter, and a Venturi tube assessment criterion; and acquiring a flowmeter correction strategy according to a flowmeter assessment result, and acquiring a Venturi tube replacement strategy according to the Venturi tube assessment result; wherein the flowmeter correction strategy is configured to correct a flowmeter, and the Venturi tube replacement strategy is configured to prompt whether the Venturi tube needs to be replaced.

In the above method, by acquiring the measurement values of the flowmeters in the Venturi tube, and combining the flowmeter assessment criteria and the Venturi tube assessment criterion, the flowmeter assessment result and the Venturi tube assessment result can be obtained, the corresponding correction strategy can be quickly obtained according to the assessment results, which enables the staff to timely and effectively maintain the Venturi tube and the flowmeters in the Venturi tube according to the corresponding correction strategy, thereby ensuring the working reliability of the Venturi tube.

In an embodiment, a flowmeter assessment criterion includes a degradation assessment criterion, the flowmeter assessment result includes a degradation assessment result; the acquiring flowmeter assessment results according to the measurement value of the first flowmeter, the measurement value of the second flowmeter, and the flowmeter assessment criteria comprises:

obtaining a measurement difference value which is a difference value between the measurement value of the first flowmeter and the measurement value of the second flowmeter; and
comparing the obtained measurement difference value with the degradation assessment criterion to obtain the degradation assessment result.

In an embodiment, a flowmeter assessment criterion includes a degradation assessment criterion, the flowmeter assessment result comprises a degradation assessment result; the acquiring flowmeter assessment results according to the measurement value of the first flowmeter, the measurement value of the second flowmeter, and the flowmeter assessment criteria comprises:

obtaining a standard difference value, which is a difference value between the measurement value of the first flowmeter and a preset standard value, or is a difference value between the measurement value of the second flowmeter and a preset standard value; and
comparing the obtained standard difference value with the degradation assessment criterion to obtain the degradation assessment result.

In an embodiment, the flowmeter correction strategy comprises a pressure difference measuring range correction strategy; the acquiring the flowmeter correction strategy according to the flowmeter assessment result comprises: acquiring the pressure difference measuring range correction strategy according to the degradation assessment result, and the pressure difference measuring range correction strategy is configured to correct a main feed water pressure difference measuring range of a flowmeter.

In an embodiment, the flowmeter assessment criterion comprises a failure assessment criterion, and the flowmeter assessment result further comprises a failure assessment result; the acquiring flowmeter assessment results according to the measurement value of the first flowmeter, the measurement value of the second flowmeter, and the flowmeter assessment criteria comprises:

obtaining a pressure difference of the first flowmeter and a pressure difference of the second flowmeter according to the measurement value of the first flowmeter and the measurement value of the second flowmeter;
obtaining a pressure difference value which is the difference value between the pressure difference of the first flowmeter and the pressure difference of the second flowmeter; and
comparing the pressure difference value with the degradation assessment criterion and the failure assessment criterion respectively, to obtain the failure assessment result.

In an embodiment, the comparing the pressure difference value with the degradation assessment criterion and the failure assessment criterion respectively to obtain the failure assessment result comprises:

comparing the pressure difference value with the degradation assessment criterion; and
if the pressure difference value is less than or equal to the degradation assessment criterion, comparing the pressure difference value with the failure assessment criterion to obtain the failure assessment result.

In an embodiment, the acquiring the Venturi tube assessment result according to the measurement value of the first flowmeter, the measurement value of the second flowmeter, and the Venturi tube assessment criterion comprises:

obtaining an actual pressure difference value of the Venturi tube according to the measurement value of the first flowmeter and the measurement value of the second flowmeter; and
comparing the actual pressure difference value with a preset pressure difference threshold value to obtain the Venturi tube assessment result.

The present invention in another aspect further provides a Venturi tube fault correction apparatus, including:

a data acquisition module, configured to acquire a measurement value of a first flowmeter and a measurement value of a second flowmeter in the Venturi tube;
a flowmeter assessment module, configured to obtain flowmeter assessment results according to the measurement value of the first flowmeter, the measurement value of the second flowmeter, and flowmeter assessment criteria;
a Venturi tube assessment module, configured to obtain a Venturi tube assessment result according to the measurement value of the first flowmeter, the measurement value of the second flowmeter, and the Venturi tube assessment criterion;
a strategy acquisition module, configured to acquire a flowmeter correction strategy according to the flowmeter assessment results, and acquire a Venturi tube replacement strategy according to the Venturi tube assessment result, wherein the flowmeter correction strategy is configured to correct a flowmeter, and the Venturi tube replacement strategy is configured to prompt whether the Venturi tube needs to be replaced.

In the above apparatus, by obtaining the measurement values of the flowmeters in the Venturi tube, and combining the flowmeter evaluation criteria and the Venturi tube assessment criterion, the flowmeter assessment result and the Venturi tube assessment result can be obtained, accordingly the corresponding correction strategy can be quickly obtained according to the assessment results, which enables the staff to timely and effectively maintain the Venturi tube and the flowmeters in the Venturi tube according to the corresponding correction strategy, thereby ensuring the working reliability of the Venturi tube

The present invention in another aspect further provides a computer device, including a processor and a memory for storing a computer program, the processor implements the steps of the above-mentioned method when executing the computer program.

The present invention in another aspect further provides a computer-readable storage medium, on which a computer program is stored, when the computer program is executed by a processor, the steps of the above-mentioned method are implemented. The details of one or more embodiments of the present invention are set forth in the accompanying drawings and the description below. Other features and advantages of the present application will be obvious from the description, drawings, and claims.

**BRIEF DESCRIPTION OF THE DRAWINGS**

In order to more clearly illustrate the technical solution in the embodiments of the present application, accompanying drawings required in the embodiments will briefly introduced below. Obviously, the accompanying drawings in the following description are merely some embodiments of the present application. Those skilled in the art can also obtain other drawings based on these drawings without making creative efforts.

FIG. 1 is an application environment diagram of a Venturi tube fault correction method according to an embodiment.
FIG. 2 is a flow chart showing assessment of erosion characteristics of a Venturi tube corresponding to the Venturi tube fault correction method according to an embodiment.
FIG. 3 is a flow chart showing a Venturi tube fault correction method according to another embodiment.
FIG. 4 is a flow chart showing a Venturi tube fault correction method according to another embodiment.
FIG. 5 is a flow chart showing a Venturi tube fault correction method according to another embodiment.
FIG. 6 is a flow chart showing a Venturi tube fault correction method according to another embodiment.
FIG. 7 is a structure block diagram of a Venturi tube fault correction apparatus according to an embodiment.
FIG. 8 is an internal structure diagram of a computer device according to an embodiment.
FIG. 9 is a flow chart showing a Venturi tube fault correction method according to another embodiment.

DETAILED DESCRIPTION

The conventional detection of the Venturi tube fault is mainly performed by means of manual periodic inspection, etc. During the inspection process, it is difficult for the maintenance personnel to quickly assess the fault of the Venturi tube according to abnormal conditions even if the maintenance personnel finds that there is a fault, and it is inconvenient to perform an efficient maintenance on the Venturi tube, resulting in a lower reliability of the Venturi tube.

In order to make the purpose, technical solution and advantages of the present application clearer, the present application will be further described in detail below in conjunction with the accompanying drawings and embodiments. It should be appreciated that the specific embodiments described here are merely utilized to explain the present application, rather than limiting the present application.

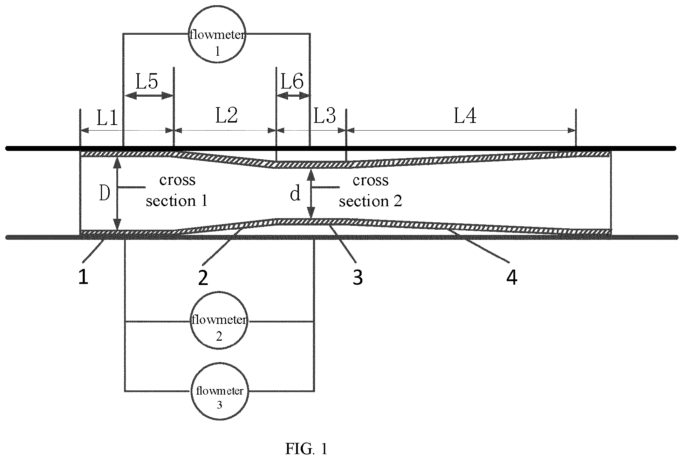

A Venturi tube fault correction method provided in the present application can be applied to the application environment as shown in FIG. 1. The Venturi tube consists of an inlet circular tube segment 1, a conical converging segment 2, a cylindrical throat portion 3, and a conical expansion segment 4. Since there is an obvious reduction in a diameter of the cylindrical throat portion 3, energy of the cylindrical throat portion 3 changes, a static pressure energy decreases while a kinetic energy increases; a flow velocity at the cylindrical throat portion 3 increases (calculated based on a rated flow during a full power operation, the flow velocity at the cylindrical throat portion 3 is approximately 5.165m/s), resulting in that the cylindrical throat portion 3 is prone to erosion. An endoscope is utilized to detect the main feed water Venturi tube of the nuclear power plant operating for a long time, it is found that there are obvious irregular erosion traces in the pressure-tapping converging segment of the Venturi tube. Meanwhile, a throat portion diameter $d$ (that is, a diameter of a cross section 2) and a tube diameter $D$ (that is, a diameter of a cross section 1) are measured, and it is found that the throat portion diameter d has a tendency to increase, while the tube diameter D has no obvious change. The detection result shows that the erosion directly leads to the change in the throat portion diameter d; the more serious the erosion is, the larger the throat portion diameter d is. In addition, L1 can also be measured from the FIG. 1, which represents a length of the inlet circular tube segment, generally has a value of D. L2 represents a length of the conical converging segment, and generally has a value of 2.7 (that is, $D-d$). L3 represents a length of the cylindrical throat portion, and generally has a value of $d\pm0.03$ d. L4 represents a length of the conical expansion segment. L5 represents a distance from an upstream pressure-tapping port on the inlet circular tube segment to an interface between the inlet circular tube segment and the converging segment, generally has a value of $0.5D\pm0.25D$. L6 represents a distance from a pressure-tapping port of the throat portion to an interface between the converging segment and the throat portion, and generally has a value of $0.5d\pm0.02d$.

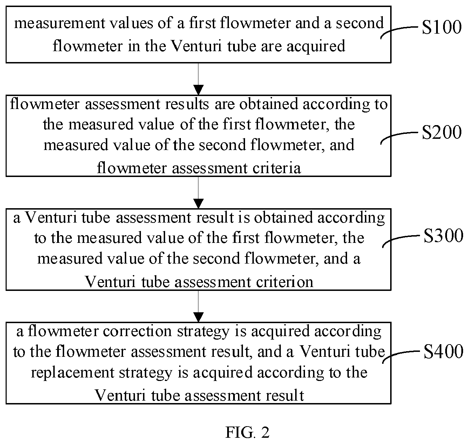

In an embodiment, as shown in FIG. 2, a Venturi tube fault correction method is provided, the method is applied to the Venturi tube in FIG. 1 as an example, and includes the following steps:
S100: measurement values of a first flowmeter and a second flowmeter in the Venturi tube are acquired.

Specifically, during the working process of the Venturi tube, the flowmeter can measure a flow rate or a pressure difference of the water flowing through the Venturi tube, that is, the measurement value can refer to the flow rate and pressure difference. Generally, in order to guarantee the measurement accuracy and reliability of the main feed water flow of the unclear power plant, the flowmeters are arranged redundantly, for example, a plurality of wide-range flowmeters and a plurality of narrow-range flowmeters can be used for the measurement, and a plurality of measurement results can be obtained correspondingly, which can ensure that the flow value in the Venturi tube can still be acquired normally even in the case that a flowmeter fails.

It should be noted that the first flowmeter and the second flowmeter may be mutually redundant narrow-range flowmeters, or the first flowmeter and the second flowmeter may be mutually redundant wide-range flowmeters, etc., that is, the selection of the first flowmeter and the second flowmeter can be adjusted according to actual situations, the wide-range flowmeter can be selected as the first flowmeter and/or the second flowmeter, or the narrow-range flowmeter can be selected as the first flowmeter and/or the second flowmeter.

Step S200: flowmeter assessment results are obtained according to the measurement value of the first flowmeter, the measurement value of the second flowmeter, and flowmeter assessment criteria.

Specifically, when the flowmeter measures the flow in the Venturi tube, the measurement accuracy of the flowmeter may also decrease in use, especially in a longterm use process. Since the Venturi tube is eroded by water during the working process, the measurement accuracy of the flowmeter may also be affected, so that it is necessary to assess the flowmeters to obtain the flowmeter assessment results.

It should be noted that the flowmeter assessment criteria are pre-set, and the flowmeter assessment criteria corresponding to different types of flowmeters (such as the wide-range flowmeter and the narrow-range flowmeter) may be the same or different. The flowmeter assessment criterion can be a preset precision value or a related assessment model, etc. If the flowmeter assessment criteria are preset precision values, the measurement value of the first flowmeter and the measurement value of the second flowmeter can be directly compared with the preset precision values respectively, then the flowmeter assessment result can be obtained. If the flowmeter assessment criterion is an assessment model, the measurement value of the first flowmeter and the measurement value of the second flowmeter should be served as inputs of the assessment models respectively, and after calculating of relevant algorithms of the assessment models, the flowmeter assessment results can be obtained.

It should be pointed out that the flowmeter assessment result represents a current performance of a flowmeter. The flowmeter assessment result can specifically include a failure assessment result and a degradation assessment result. These two results will be described in detail later. It is also understandable that whether it is a failure assessment result or a degradation assessment result, there should be two corresponding results, that is, a flowmeter assessment result of the first flowmeter and a flowmeter assessment result of the second flowmeter.

Step S300: a Venturi tube assessment result is obtained according to the measurement value of the first flowmeter, the measurement value of the second flowmeter, and a Venturi tube assessment criterion.

Specifically, the Venturi tube has an obvious reduction in the diameter at the cylindrical throat portion, so that the Venturi tube is prone to the erosion by the water flow at the cylindrical throat portion, resulting in a change in the diameter d of the cylindrical throat portion. Accordingly, the assessment of the Venturi tube is required. The measurement value of the first flowmeter includes a pressure difference collected by the first flowmeter; the measurement value of the second flowmeter includes a pressure difference collected by the second flowmeter. The Venturi tube assessment criterion can be a preset standard pressure difference value or a Venturi tube assessment model. If the Venturi tube assessment criterion is the preset standard pressure difference value, the measurement value of the first flowmeter and the measurement value of the second flowmeter are compared with the preset standard pressure difference value to obtain the Venturi tube assessment result. If the Venturi tube assessment criterion is the Venturi tube assessment model, the measurement value of the first flowmeter and the measurement value of the second flowmeter serve as inputs of the Venturi tube assessment model, and after calculating of a relevant algorithm of the Venturi tube assessment model, the Venturi tube assessment result can be obtained.

It should be noted that the Venturi tube assessment result indicates that whether the Venturi tube is corroded. For example, it indicates that the Venturi tube is corroded when the measurement value of the first flowmeter and the measurement value of the second flowmeter are both greater than the preset standard differential pressure value, when the measurement value of the first flowmeter and the measurement value of the second flowmeter are compared to the preset standard differential pressure value.

Step S400: a flowmeter correction strategy is acquired according to the flowmeter assessment result, and a Venturi tube replacement strategy is acquired according to the Venturi tube assessment result. The flowmeter correction strategy is configured to correct the flowmeter, and the Venturi tube replacement strategy is configured to prompt whether the Venturi tube needs to be replaced.

Specifically, different flowmeter assessment results correspond to different flowmeter correction strategies. For example, when the flowmeter assessment result is a degradation assessment result, the measurement accuracy of the flowmeter (i.e., the first flowmeter and/or the second flowmeter) can be corrected, such as adjusting a measuring range of the flowmeter to implement the accuracy correction. When the flowmeter assessment result is the failure assessment result, the flowmeter needs to be replaced. The Venturi tube replacement strategy includes a replacement or a continued use of the Venturi tube.

In the above method, the measurement values of the flowmeters in the Venturi tube are acquired, and combined with the flowmeter assessment criteria and the Venturi tube assessment criterion, to obtain the flowmeter assessment results and the Venturi tube assessment result, so that the corresponding correction strategy can be quickly obtained according to the assessment results, which enables the staff to timely and effectively maintain the Venturi tube and the flowmeters in the Venturi tube according to the corresponding correction strategy, thereby ensuring the working reliability of the Venturi tube.

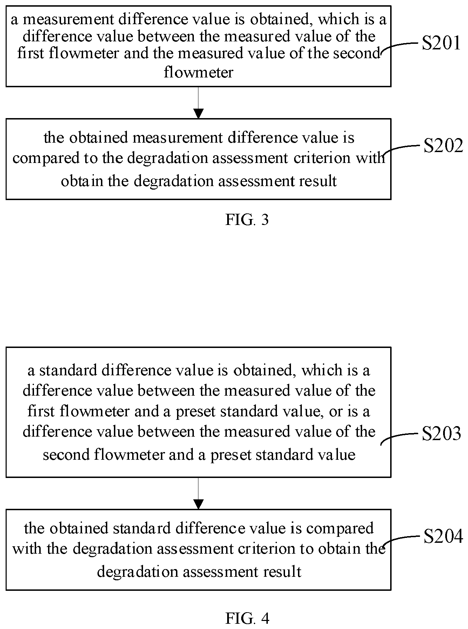

In an embodiment, the flowmeter assessment criterion includes a degradation assessment criterion; the flowmeter assessment result includes a degradation assessment result. As shown in FIG. 3, the step S200 includes: at step S201, a measurement difference value is obtained, which is the difference value between the measurement value of the first flowmeter and the measurement value of the second flowmeter; at step S202, the obtained measurement difference value is compared with the degradation assessment criterion to obtain the degradation assessment result.

Specifically, the degradation assessment criterion is configured to assess whether a measurement accuracy level of the flowmeter needs to be degraded, the degradation assessment criterion can be a specific data and can be preset according to an actual situation. For example, the degradation assessment criterion is obtained by calculating of technical accuracies and inherent accuracies, etc., of the first flowmeter and the second flowmeter. The corresponding degradation assessment results include two types, one is that the measurement difference value is greater than the degradation assessment criterion, and the other is that the measurement difference value is less than or equal to the degradation assessment criterion.

It should be noted that the first flowmeter and the second flowmeter are mutually redundant, that is, the first flowmeter and the second flowmeter measure at the same measurement point and obtain corresponding measurement values. The specific computational formula for the degradation assessment criterion is as follows:

$$C(mv) = ((\varepsilon(i)^2 + \varepsilon(dr)^2 + \varepsilon(te)^2 + \varepsilon(spe)^2)^{1/2} \ ;$$

In the above formula, $C(mv)$ represents the degradation assessment criterion; $\varepsilon(i)$ represents an inherent accuracy of a flowmeter; $\varepsilon(dr)$ represents a stability of an instrument; $\varepsilon(te)$ represents a temperature affect; $\varepsilon(spe)$ represents a static pressure affect.

Further, in an embodiment, the step S400 includes: a pressure difference measuring range correction strategy is acquired according to the degradation assessment result.

The pressure difference measuring range correction strategy is configured to correct a main feed water pressure difference measuring range of a flowmeter.

Specifically, since there are two types of degradation assessment results, there are also two corresponding pressure difference measuring range correction strategies. When the degradation assessment result is that the measurement difference value is greater than the degradation assessment criterion, the pressure difference measuring range correction strategy is configured to correct the main feed water pressure difference measuring range; the correction method is a full power main feed water flow reference standard consistency method, that is, the pressure difference value is corrected to be equal to a reference standard on a full power platform. The specific formula for the main feed water pressure difference measuring range correction is as follows:

$$\Delta p_r{}' = \frac{Q_r{}^2 \Delta p_z}{\varphi Q_e{}^2};$$

In the above formula, $\Delta p_d'$ is the difference value between the corrected main feed water pressure difference and the reference value, in units of %; $\Delta p_r'$ is the corrected main feed water pressure difference measuring range.

When the degradation assessment result indicates that the measurement difference value is less than or equal to the degradation assessment criterion, the pressure difference measuring range correction strategy is to output prompt information for reminding a staff to perform a regular maintenance.

In an embodiment, the flowmeter assessment criterion includes the degradation assessment criterion; the flowmeter assessment result includes the degradation assessment result. As shown in FIG. 4, the step S200 includes: at step S203, a standard difference value is obtained, which is the difference value between the measurement value of the first flowmeter and a preset standard value, or is the difference value between the measurement value of the second flowmeter and the preset standard value; at step S204, the obtained standard difference value is compared with the degradation assessment criterion to obtain the degradation assessment result.

Specifically, the preset standard value is preset according to the actual situation. For example, the preset standard value can be a heat balance flow rate. The heat balance flow rate refers to a feed water flow rate at an inlet of a steam generator. The degradation assessment criterion is the same as the degradation assessment criterion mentioned above, and it can be a preset value; the failure assessment result is also the same as the failure assessment result mentioned above.

It should be noted that the first flowmeter and the second flowmeter here are no longer mutually redundant, that is, the first flowmeter measures at one measurement point, and the second flowmeter measures at another measurement point.

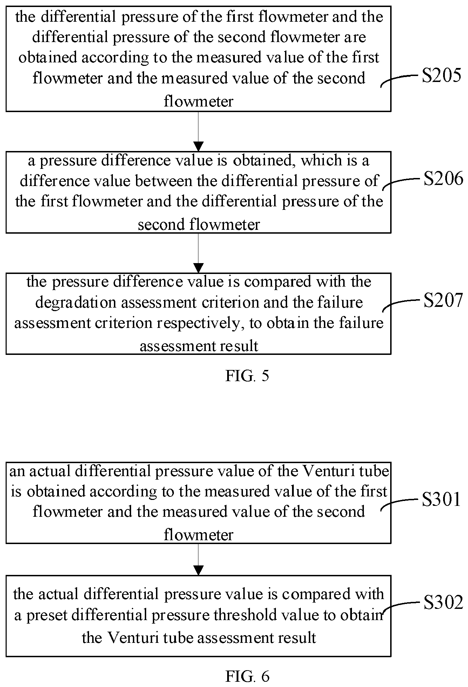

In an embodiment, the flowmeter assessment criterion includes the failure assessment criterion; and the flowmeter assessment result further includes the failure assessment result. As shown in FIG. 5, the step S200 includes: at step S205, the pressure difference of the first flowmeter and the pressure difference of the second flowmeter are obtained according to the measurement value of the first flowmeter and the measurement value of the second flowmeter; at step S206, a pressure difference value is obtained, which is the difference value between the pressure difference of the first flowmeter and the pressure difference of the second flowmeter; at step S207, the pressure difference value is compared with the degradation assessment criterion and the failure assessment criterion respectively, to obtain the failure assessment result.

Specifically, the flowmeter can collect the flow rate of the water in the Venturi tube, and then the pressure difference can be obtained by converting the value of the flow rate collected by the flowmeter. Of course, in other embodiments, it is also possible to measure the pressure difference by directly installing a pressure difference measurement module on the flowmeter. The specific conversion formula of the flow rate and the pressure difference is as follows:

$$q_m = \frac{C}{\sqrt{1-\beta^4}} \varepsilon \frac{\pi}{4} d^2 \sqrt{2\Delta p\rho} = \frac{D^2 d^2}{\sqrt{D^4 - d^4}} C \varepsilon \frac{\pi}{4} \sqrt{2\Delta p\rho} \ ;$$

$q_m$ is a mass flow rate; C is an outflow coefficient, which is a ratio of an actual flow rate to a theoretical flow rate; ε is an expansibility coefficient, which is a correction to a coefficient change caused by a density change of the fluid through a throttling element; D is an inner diameter of the tube; d is an inner diameter of a throat portion of the Venturi tube; β is a diameter ratio, β=d/D; Δp is the pressure difference; ρ is a fluid density.

It should be pointed out that there are two types of failure assessment results, one indicates that the Venturi tube is corroded, and the other indicates that the Venturi tube is not corroded. The failure assessment criterion is a specific value, which can be obtained by calculating via relevant parameter data, and can be preset. Let the failure assessment criterion is C(fv), calculation formula for the failure assessment criterion C(fv) is as follows:

$$C(fv) = \delta(FS) - X * \varepsilon(t) \ ;$$

$$\delta(FS) = (\delta(FP)^2 - (\varepsilon(t)_{T1}{}^2 + \varepsilon(t)_{T2}{}^2 + \varepsilon(t)_{Tn}{}^2))^{1/2} \ ;$$

In the above formula, δ(FS) represents a functional tolerance of a flowmeter; δ(FP) represents a process functional tolerance; X represents a coefficient determined by the number of the redundant flowmeters; $\varepsilon(t)_{Tn}$ represents a technical precision of the n-th processing step of a flowmeter channel.

Further, in an embodiment, the step S207 includes: the pressure difference value is compared with the degradation assessment criterion; if the pressure difference value is less than or equal to the degradation assessment criterion, the pressure difference value is compared with the failure assessment criterion to obtain the failure assessment result.

Specifically, the failure assessment result, the degradation assessment criterion, and the failure assessment criterion are mentioned above and will not be repeated here. It should be noted that when the pressure difference value is compared with the failure assessment criterion, if the pressure difference value is greater than the failure assessment criterion, the failure assessment result obtained is the first type, which represents that the Venturi tube is eroded. When the pressure difference value is less than or equal to the failure assessment criterion, the failure assessment result obtained is the second type, which represents that the Venturi tube is not eroded.

In an embodiment, as shown in FIG. 6, the step S300 includes: at step S301, an actual pressure difference value of the Venturi tube is obtained according to the measurement value of the first flowmeter and the measurement value of the second flowmeter; at step S302, the actual pressure difference value is compared with a preset pressure difference threshold value to obtain the Venturi tube assessment result.

Specifically, the preset pressure difference threshold value can be calculated according to relevant parameters of the Venturi tube; and the calculation formula of the preset pressure difference threshold value is as follows:

$$\Delta p_o = \frac{8q_m^2(D^4-(d+2d_o)^4)}{D^4(d+2d_o)^4 C^2\varepsilon^2\pi^2\rho} \;,$$

$$d_o = \theta d_h \;;$$

In the above formula, $d_h$ denotes a total thickness of a steel plate of the throat portion, $\theta$ denotes a thickness deviation coefficient, and is generally ranged from 0.4 to 0.5; C denotes an outflow coefficient, which is a ratio of an actual flow rate to a theoretical flow rate; $\varepsilon$ is an expansibility coefficient, which is a correction to a coefficient change caused by a density change of the fluid through a throttling element; D is an inner diameter of the tube; $d$ is an inner diameter of the throat portion of the Venturi tube; $\rho$ is the fluid density; and $q_m$ is a mass flow rate.

There are also two types of Venturi tube assessment results. The first is that the actual pressure difference value is less than the preset pressure difference threshold value; the second is that the actual pressure difference value is greater than or equal to the preset pressure difference threshold value. The Venturi tube correction strategy obtained corresponding to the first type of the Venturi tube assessment result is to prompt that the Venturi tube needs to be replaced; and the Venturi tube correction strategy corresponding to the second type of the Venturi tube assessment result is to prompt that the Venturi tube does not need to be replaced.

It should be understood that although the various steps in the flow charts of FIGS. 2-6 are shown sequentially as indicated by the arrows, these steps are not definitely executed sequentially in the order indicated by the arrows. Unless otherwise specified herein, there is no strict order restriction on the execution of these steps, and these steps can be executed in other orders. Moreover, at least some of the steps in FIGS. 2-6 may include multiple steps or stages, these steps or stages are not definitely executed at the same moment, but may be executed at different moments. These steps or stages are not definitely performed sequentially, but may be performed in turns or alternately with other steps or at least a part of steps or stages in other steps.

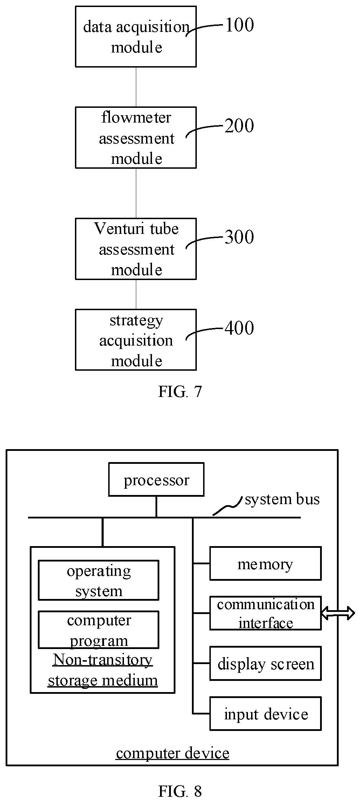

In an embodiment, as shown in FIG. 7, a Venturi tube fault correction apparatus is provided, including: a data acquisition module 100, a flowmeter assessment module 200, a Venturi tube assessment module 300, and a strategy acquisition module 400.

The data acquisition module 100 is configured to acquire a measurement value of a first flowmeter and a measurement value of a second flowmeter in the Venturi tube.

The flowmeter assessment module 200 is configured to obtain flowmeter assessment results according to the measurement value of the first flowmeter, the measurement value of the second flowmeter, and flowmeter assessment criteria.

The Venturi tube assessment module 300 is configured to obtain a Venturi tube assessment result according to the measurement value of the first flowmeter, the measurement value of the second flowmeter, and the Venturi tube assessment criterion.

The strategy acquisition module 400 is configured to acquire a flowmeter correction strategy according to the flowmeter assessment results, and acquire a Venturi tube replacement strategy according to the Venturi tube assessment result.

The flowmeter correction strategy is configured to correct a flowmeter; and the Venturi tube replacement strategy is configured to prompt whether the Venturi tube needs to be replaced.

In the above device, the measurement values of the flowmeters in the Venturi tube are acquired, and combined with the flowmeter assessment criteria and the Venturi tube assessment criterion, the flowmeter assessment results and the Venturi tube assessment result can be obtained, to quickly obtain the corresponding correction strategy according to the assessment results. So that the staff can timely and effectively maintain the Venturi tube and the flowmeters in the Venturi tube according to the corresponding correction strategy, thereby ensuring the working reliability of the Venturi tube.

In an embodiment, the flowmeter assessment criterion includes a degradation assessment criterion; the flowmeter assessment results include a degradation assessment result. The flowmeter assessment module 200 includes a measurement difference value calculation unit and a measurement difference value comparison unit. The measurement difference value calculation unit is configured to acquire a difference value between the measurement value of the first flowmeter and the measurement value of the second flowmeter as a measurement difference value. The measurement difference value comparison unit is configured to compare the obtained measurement difference value with the degradation assessment criterion to obtain the degradation assessment result.

Further, in an embodiment, the strategy acquisition module 400 includes a measuring range correction unit configured to acquire a pressure difference measuring range correction strategy according to the degradation assessment result.

In an embodiment, the flowmeter assessment criterion includes a degradation assessment criterion; the flowmeter assessment results include a degradation assessment result. The flowmeter assessment module 200 also includes a standard difference value acquisition unit and a standard difference value comparison unit. The standard difference value acquisition unit is configured to acquire a difference value between the measurement value of the first flowmeter and a preset standard value as a standard difference value, or acquire a difference value between the measurement value of the second flowmeter and the preset standard value as the standard difference value. The standard difference value comparison unit is configured to compare the obtained standard difference value with the degradation assessment criterion to obtain the degradation assessment result.

In an embodiment, the flowmeter assessment criterion includes a failure assessment criterion, and the flowmeter assessment results further include a failure assessment result. The flowmeter assessment module 200 further includes a pressure difference calculation unit, a pressure difference value calculation unit, and a pressure difference value comparison unit. The pressure difference calculation unit is configured to acquire a pressure difference of the first flowmeter and a pressure difference of the second flowmeter according to the measurement value of the first flowmeter and the measurement value of the second flowmeter. The pressure difference value calculation unit is configured to acquire a difference value between the pressure difference of the first flowmeter and the pressure difference of the second flowmeter as the pressure difference value. The pressure difference value comparison unit is configured to compare the pressure difference value with the degradation assessment criterion and the failure assessment criterion respectively, to obtain the failure assessment result.

Further, in an embodiment, the pressure difference value comparison unit includes a difference value comparison determination unit which is configured to compare the pressure difference value with the degradation assessment criterion; if the pressure difference value is less than or equal to the degradation assessment criterion, then the pressure difference value is compared with the failure assessment criterion to obtain the failure assessment result.

In an embodiment, the Venturi tube assessment module 300 includes an actual pressure difference acquisition unit and an actual pressure difference comparison unit. The actual pressure difference acquisition unit is configured to acquire an actual pressure difference value of the Venturi tube according to the measurement value of the first flowmeter and the measurement value of the second flowmeter. The actual pressure difference comparison unit is configured to compare the actual pressure difference value with a preset pressure difference threshold value to obtain the Venturi tube assessment result.

For the specific limitations on the Venturi tube fault correction apparatus, reference can be made to the above-mentioned limitations on the Venturi tube fault correction method, which will not be repeated here. Each module in the above-mentioned Venturi tube fault correction apparatus can be fully or partially implemented by software, hardware and a combination thereof. The above-mentioned modules can be embedded in or independent of a processor in the computer device in the form of hardware, and can also be stored in a memory of the computer device in the form of software, so that the processor can invoke and execute the corresponding operations of the above-mentioned modules.

In an embodiment, a computer device is provided, which can be a terminal, and the internal structure thereof may be as shown in FIG. 8. The computer device includes a processor, a memory, a communication interface, a display screen and an input device connected through a system bus. The processor of the computer device is configured to provide calculation and control capabilities. The memory of the computer device includes a non-transitory storage medium and an internal memory. The non-transitory storage medium stores an operating system and a computer program. The internal memory provides an environment for the operation of the operating system and the computer program in the non-transitory storage medium. The communication interface of the computer device is configured to communicate with an external terminal in a wired or wireless manner; and the wireless manner can be implemented through WIFI, an operator network, NFC (Near Field Communication) or other technologies. When the computer program is executed by the processor, a Venturi tube fault correction method is implemented. The display screen of the computer device may be a liquid crystal display screen or an electronic ink display screen; and the input device of the computer device may be a touch layer covering the display screen, or a button, a trackball or a touch pad provided on the housing of the computer device, or can also be an external keyboard, touchpad, or mouse.

Those skilled in the art can understand that the structure shown in FIG. 8 is only a block diagram of a partial structure related to the solution of the present application and does not constitute a limitation on the computer device to which the solution of the present application is applied. The specific computer device can include more or fewer components than shown in the figures, or some combined components, or have a different arrangement of components.

In an embodiment, a computer device is provided, which includes a processor and a memory for storing a computer program, and the processor implements the steps of the above Venturi fault correction method when executing the computer program.

In an embodiment, a computer-readable storage medium is provided, on which a computer program is stored, and when the computer program is executed by a processor, the steps of the above Venturi tube fault correction method are implemented.

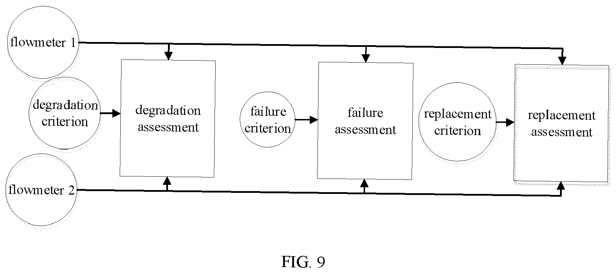

In an embodiment, in order to describe the present application in detail, please refer to FIG. 9, the Venturi tube fault correction method in the present application is applied to a nuclear power plant, in which the main feed water of the nuclear power plant adopts redundant measurement, that is, two sets of pressure tapping devices and transmitters. Although the sampling ports are installed in different directions on the same cross-section, the measurement results are very similar in theory. The measurement of the flow rate of the main feed water in the Venturi tube is shown in FIG. 9.

The degradation assessment refers to that comparison is performed between flowmeters 1 (i.e., the first flowmeters)/flowmeters 2 (i.e., the second flowmeters), and the flowmeter 1/flowmeter 2 is compared with the degradation criterion (i.e., degradation assessment criterion) respectively, and it is assessed whether there exists a degradation result; it is necessary to select an appropriate window to verify the flowmeter 1/flowmeter 2 and channels thereof if there exists a degradation, and the flowmeter 1/flowmeter 2 is corrected if necessary.

The failure assessment refers to that the flowmeter 1/flowmeter 2 is compared with the failure criterion (i.e., failure assessment criterion) respectively, and it is assessed whether there exists a failure result; it is necessary to select an appropriate window to verify the flowmeter 1/flowmeter 2 and channels thereof if there exists a failure, and the flowmeter 1/flowmeter 2 is corrected if necessary.

The replacement assessment refers to that the obtained difference value of the flowmeter 1 (i.e., the first flowmeter)/flowmeter 2 (i.e., the second flowmeter) is compared with the replacement criterion (i.e., the Venturi tube assessment criterion) respectively, and it is assessed whether the Venturi tube is seriously eroded; and the Venturi tube needs to be replaced if the replacement criterion is exceeded.

More specifically, the Venturi tube assessment criterion includes a single-round refueling cycle erosion effect replacement criterion and erosion cumulative effect replacement criterion. The single-round refueling cycle erosion effect replacement criterion is: if the deviation $\Delta p_d{}'$ between the main feed water pressure difference of the single-round refueling cycle of the nuclear power unit and the reference value is greater than a permissible single-round refueling cycle replacement criterion $\Delta p_o$, that is, $\Delta p_d{}' > \Delta p_o$, there is an abnormality in a partial material of an inner flow channel of the Venturi tube; if the erosion effect is too obvious in a short period of time, the Venturi tube should be replaced. The specific calculation formulas of $\Delta p_d$ and $\Delta p_o$ are as follows:

$$\Delta p_d{}' = \Delta p_{d(n)} - \Delta p_{d(n-1)} \ ;$$

$$\Delta p_o = \mu C(fv) \ .$$

$\Delta p_{d(n)}$ denotes the pressure difference deviation of the n-th refueling cycle; $\mu$ is the failure deviation coefficient, which is an empirical value, and generally has a value of 0.7 to 0.9.

The erosion cumulative effect replacement criterion is: if the cumulative erosion amount d' of the Venturi tube is greater than a permissible erosion cumulative effect replacement criterion $d_o$, that is, $d' > d_o$. It shows that the steel plate at the cylindrical throat portion has been cumulatively eroded seriously at the moment. If the erosion continues, the steel plate may be pierced or deformed, and the steel plate at the cylindrical throat portion may even be severely eroded, resulting in that the steel plate is damaged due to insufficient structural strength. If a damaged part is flushed into the evaporator, very serious consequences may be leaded. The specific calculation formula of $d_o$ is as follows:

$$d_o = \theta d_h \ ;$$

$d_h$ is a total thickness of the steel plate at the throat portion; $\theta$ is the thickness deviation coefficient, which is an empirical value, and generally has a value of 0.4 to 0.5.

Since the measurement of the actual size $d_o$ is very troublesome, the corresponding pressure difference value can be calculated. According to the above data, the diameter $d_0'$ of the throat portion and the pressure difference threshold $\Delta p_o$ can be replaced under the erosion cumulative effect can be calculated:

$$d_o' = d + 2d_o \ ;$$

$$\Delta p_o = \frac{8q_m^2(D^4-(d+2d_o)^4)}{D^4(d+2d_o)^4 C^2 \varepsilon^2 \pi^2 \rho} \quad .$$

If the actual pressure difference value of the Venturi tube is less than the pressure difference threshold value $\Delta p_o$ replaced under the erosion cumulative effect, that is, when $\Delta p < \Delta p_o$, it is recommended that the Venturi tube needs to be replaced immediately.

The technical features of the above embodiments can be combined arbitrarily. In order to make the description concise, all possible combinations of the technical features in the above embodiments are not described. However, as long as there is no contradiction in the combination of these technical features, they should be considered to be within the scope of the present application.

The above-mentioned embodiments are merely some embodiments of the present application, and the description thereof is relatively specific and detailed, but it should not be construed as limiting the scope of the present invention. It should be noted that those skilled in the art can make several modifications and improvements without departing from the concept of the present application, and these all fall within the protection scope of the present application. Therefore, the scope of protection of the patent application should be subject to the appended claims.

**Claims**

1. A Venturi tube fault correction method, **characterized by** comprising:

    acquiring a measurement value of a first flowmeter and a measurement value of a second flowmeter in the Venturi tube;
    acquiring flowmeter assessment results according to the measurement value of the first flowmeter, the measurement value of the second flowmeter, and flowmeter assessment criteria;
    obtaining a Venturi tube assessment result according to the measurement value of the first flowmeter, the measurement value of the second flowmeter, and a Venturi tube assessment criterion; and
    acquiring a flowmeter correction strategy according to a flowmeter assessment result, and acquiring a Venturi tube replacement strategy according to the Venturi tube assessment result, wherein the flowmeter correction strategy is configured to correct the flowmeters, and the Venturi tube replacement strategy is configured to prompt whether the Venturi tube needs to be replaced.

2. The method according to claim 1, wherein a flowmeter assessment criterion comprises a degradation assessment criterion, the flowmeter assessment result comprises a degradation assessment result; the acquiring flowmeter assessment results according to the measurement value of the first flowmeter, the measurement value of the second flowmeter, and the flowmeter assessment criteria comprises:

    obtaining a measurement difference value which is a difference value between the measurement value of the first flowmeter and the measurement value of the second flowmeter; and
    comparing the obtained measurement difference value with the degradation assessment criterion to obtain the degradation assessment result.

3. The method according to claim 1, wherein a flowmeter assessment criterion comprises a degradation assessment criterion, the flowmeter assessment result comprises a degradation assessment result; the acquiring flowmeter assessment results according to the measurement value of the first flowmeter, the measurement value of the second flowmeter, and the flowmeter assessment criteria comprises:

    obtaining a standard difference value which is a difference value between the measurement value of the first flowmeter and a preset standard value, or is a difference value between the measurement value of the second flowmeter and a preset standard value; and
    comparing the obtained standard difference value with the degradation assessment criterion to obtain the degradation assessment result.

4. The method according to claim 2, wherein the flowmeter correction strategy comprises a pressure difference measuring range correction strategy; the acquiring the flowmeter correction strategy according to the flowmeter assessment result comprises:
    when the degradation assessment result is that the measurement difference value is greater than the degradation assessment criterion, acquiring the pressure difference measuring range correction strategy which is configured to correct a main feed water pressure difference measuring range of a flowmeter.

**5.** The method according to claim 2 or 3, wherein the flowmeter assessment criterion comprises a failure assessment criterion, and the flowmeter assessment result further comprises a failure assessment result; the acquiring flowmeter assessment results according to the measurement value of the first flowmeter, the measurement value of the second flowmeter, and the flowmeter assessment criteria comprises:

> obtaining a pressure difference of the first flowmeter and a pressure difference of the second flowmeter according to the measurement value of the first flowmeter and the measurement value of the second flowmeter;
> obtaining a pressure difference value which is a difference value between the pressure difference of the first flowmeter and the pressure difference of the second flowmeter; and
> comparing the pressure difference value with the degradation assessment criterion and the failure assessment criterion respectively, to obtain the failure assessment result.

**6.** The method according to claim 5, wherein the comparing the pressure difference value with the degradation assessment criterion and the failure assessment criterion respectively to obtain the failure assessment result comprises:

> comparing the pressure difference value with the degradation assessment criterion; and
> if the pressure difference value is less than or equal to the degradation assessment criterion, comparing the pressure difference value with the failure assessment criterion to obtain the failure assessment result.

**7.** The method according to claim 1, wherein the obtaining the Venturi tube assessment result according to the measurement value of the first flowmeter, the measurement value of the second flowmeter, and the Venturi tube assessment criterion comprises:

> obtaining an actual pressure difference value of the Venturi tube according to the measurement value of the first flowmeter and the measurement value of the second flowmeter; and
> comparing the actual pressure difference value with a preset pressure difference threshold value to obtain the Venturi tube assessment result.

**8.** The method according to claim 1, wherein a flowmeter assessment criterion is a preset precision value; and the acquiring the flowmeter assessment results according to the measurement value of the first flowmeter, the measurement value of the second flowmeter, and the flowmeter assessment criteria comprises:
comparing the measurement value of the first flowmeter and the measurement value of the second flowmeter with the preset precision values respectively, to obtain the flowmeter assessment result.

**9.** The method according to claim 1, wherein a flowmeter assessment criterion is an assessment model; the acquiring the flowmeter assessment results according to the measurement value of the first flowmeter, the measurement value of the second flowmeter, and the flowmeter assessment criteria comprises:
inputting the measurement value of the first flowmeter and the measurement value of the second flowmeter into assessment models respectively, and calculating by relevant algorithms of the assessment models to obtain the flowmeter assessment results.

**10.** The method according to claim 1, wherein a flowmeter assessment criterion is a preset standard pressure difference value; the obtaining the Venturi tube assessment result according to the measurement value of the first flowmeter, the measurement value of the second flowmeter, and the Venturi tube assessment criterion comprises:
comparing the measurement value of the first flowmeter and the measurement value of the second flowmeter with the preset standard pressure difference value to obtain the Venturi tube assessment result.

**11.** The method according to claim 1, wherein a flowmeter assessment criterion is a Venturi tube assessment model; the obtaining the Venturi tube assessment result according to the measurement value of the first flowmeter, the measurement value of the second flowmeter, and the Venturi tube assessment criterion comprises:
inputting the measurement value of the first flowmeter and the measurement value of the second flowmeter serve into the Venturi tube assessment model, to calculate through a relevant algorithm of the Venturi tube assessment model and obtain the Venturi tube assessment result.

**12.** The method according to claim 1, wherein the first flowmeter and the second flowmeter are mutually redundant narrow-range flowmeters.

13. The method according to claim 1, wherein the first flowmeter and the second flowmeter are mutually redundant wide-range flowmeters.

14. A Venturi tube fault correction apparatus, **characterized by** comprising:

   a data acquisition module, configured to acquire a measurement value of a first flowmeter and a measurement value of a second flowmeter in the Venturi tube;
   a flowmeter assessment module, configured to obtain flowmeter assessment results according to the measurement value of the first flowmeter, the measurement value of the second flowmeter, and flowmeter assessment criteria;
   a Venturi tube assessment module, configured to obtain a Venturi tube assessment result according to the measurement value of the first flowmeter, the measurement value of the second flowmeter, and the Venturi tube assessment criterion;
   a strategy acquisition module, configured to acquire a flowmeter correction strategy according to the flowmeter assessment results, and acquire a Venturi tube replacement strategy according to the Venturi tube assessment result, wherein the flowmeter correction strategy is configured to correct a flowmeter, and the Venturi tube replacement strategy is configured to prompt whether the Venturi tube needs to be replaced.

15. A computer device, comprising a processor and a memory for storing a computer program, wherein the processor implements the steps of the method according to any one of claims 1 to 13 when executing the computer program.

16. A computer-readable storage medium, on which a computer program is stored, wherein when the computer program is executed by a processor, the steps of the method according to any one of claims 1 to 13 are implemented.

FIG. 1

measurement values of a first flowmeter and a second flowmeter in the Venturi tube are acquired — S100

flowmeter assessment results are obtained according to the measured value of the first flowmeter, the measured value of the second flowmeter, and flowmeter assessment criteria — S200

a Venturi tube assessment result is obtained according to the measured value of the first flowmeter, the measured value of the second flowmeter, and a Venturi tube assessment criterion — S300

a flowmeter correction strategy is acquired according to the flowmeter assessment result, and a Venturi tube replacement strategy is acquired according to the Venturi tube assessment result — S400

FIG. 2

a measurement difference value is obtained, which is a difference value between the measured value of the first flowmeter and the measured value of the second flowmeter — S201

the obtained measurement difference value is compared to the degradation assessment criterion with obtain the degradation assessment result — S202

FIG. 3

a standard difference value is obtained, which is a difference value between the measured value of the first flowmeter and a preset standard value, or is a difference value between the measured value of the second flowmeter and a preset standard value — S203

the obtained standard difference value is compared with the degradation assessment criterion to obtain the degradation assessment result — S204

FIG. 4

the differential pressure of the first flowmeter and the differential pressure of the second flowmeter are obtained according to the measured value of the first flowmeter and the measured value of the second flowmeter ⟋— S205

↓

a pressure difference value is obtained, which is a difference value between the differential pressure of the first flowmeter and the differential pressure of the second flowmeter ⟋— S206

↓

the pressure difference value is compared with the degradation assessment criterion and the failure assessment criterion respectively, to obtain the failure assessment result ⟋— S207

FIG. 5

an actual differential pressure value of the Venturi tube is obtained according to the measured value of the first flowmeter and the measured value of the second flowmeter ⟋— S301

↓

the actual differential pressure value is compared with a preset differential pressure threshold value to obtain the Venturi tube assessment result ⟋— S302

FIG. 6

data acquisition module —100

flowmeter assessment module —200

Venturi tube assessment module —300

strategy acquisition module —400

FIG. 7

processor

system bus

operating system

computer program

Non-transitory storage medium

memory

communication interface

display screen

input device

computer device

FIG. 8

FIG. 9

## INTERNATIONAL SEARCH REPORT

| International application No. |
| --- |
| **PCT/CN2021/082919** |

**A. CLASSIFICATION OF SUBJECT MATTER**

G01F 25/00(2006.01)i

According to International Patent Classification (IPC) or to both national classification and IPC

**B. FIELDS SEARCHED**

Minimum documentation searched (classification system followed by classification symbols)

G01F 25

Documentation searched other than minimum documentation to the extent that such documents are included in the fields searched

Electronic data base consulted during the international search (name of data base and, where practicable, search terms used)

CNABS, CPRSABS, CNTXT, CNKI, VEN: 故障, 文丘里, 流量, 文氏管, 第一, 第二, 两, 二, 双, 流量计, 差, 压力, 压差, 规则, 策略, 修正, 更换, fault, venturi, tube, correct+, detect+, stor+, flow, meter?, snes+, first, second, one, two, dual, double, differential, model, strategy, rule, change

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111928925 A (CHINA GENERAL NUCLEAR POWER OPERATION CO., LTD. et al.) 13 November 2020 (2020-11-13) entire document | 1-16 |
| X | CN 106224133 A (WEICHAI POWER CO., LTD.) 14 December 2016 (2016-12-14) description, paragraphs 32-57, figure 1 | 1-16 |
| A | CN 110514354 A (WEICHAI POWER CO., LTD.) 29 November 2019 (2019-11-29) entire document | 1-16 |
| A | CN 104390657 A (ZHEJIANG UNIVERSITY) 04 March 2015 (2015-03-04) entire document | 1-16 |
| A | CN 107590506 A (BEIHANG UNIVERSITY) 16 January 2018 (2018-01-16) entire document | 1-16 |
| A | CN 111120156 A (WEICHAI POWER CO., LTD.) 08 May 2020 (2020-05-08) entire document | 1-16 |
| A | US 2005161029 A1 (HONDA MOTOR CO., LTD.) 28 July 2005 (2005-07-28) entire document | 1-16 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 June 2021** | **28 June 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/082919** |

**C.    DOCUMENTS CONSIDERED TO BE RELEVANT**

| Category* | Citation of document, with indication, where appropriate, of the relevant passages | Relevant to claim No. |
|---|---|---|
| A | JP 2018123694 A (HITACHI AUTOMOTIVE SYSTEMS LTD.) 09 August 2018 (2018-08-09)<br>        entire document | 1-16 |

Form PCT/ISA/210 (second sheet) (January 2015)

**INTERNATIONAL SEARCH REPORT**
Information on patent family members

| International application No. |
| --- |
| **PCT/CN2021/082919** |

| Patent document cited in search report | | | Publication date (day/month/year) | Patent family member(s) | | | Publication date (day/month/year) |
| --- | --- | --- | --- | --- | --- | --- | --- |
| CN | 111928925 | A | 13 November 2020 | None | | | |
| CN | 106224133 | A | 14 December 2016 | CN | 106224133 | B | 31 August 2018 |
| CN | 110514354 | A | 29 November 2019 | None | | | |
| CN | 104390657 | A | 04 March 2015 | CN | 104390657 | B | 12 December 2017 |
| CN | 107590506 | A | 16 January 2018 | CN | 107590506 | B | 15 June 2018 |
| CN | 111120156 | A | 08 May 2020 | CN | 111120156 | B | 23 February 2021 |
| US | 2005161029 | A1 | 28 July 2005 | JP | 4354283 | B2 | 28 October 2009 |
| | | | | US | 7055375 | B2 | 06 June 2006 |
| | | | | DE | 102005002540 | A1 | 04 August 2005 |
| | | | | DE | 102005002540 | B4 | 26 September 2013 |
| | | | | JP | 2005207237 | A | 04 August 2005 |
| JP | 2018123694 | A | 09 August 2018 | JP | 6653274 | B2 | 26 February 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010688219